# EUROPÄISCHE PATENTSCHRIFT

(11) **EP 0 434 823 B1**
(45) Veröffentlichungstag und Bekanntmachung des Hinweises auf die Patenterteilung: **15.09.1993**
(21) Anmeldenummer: 90911610.5
(22) Anmeldetag: 17.07.1990
(51) Int. Cl.: B60T 8/26, B60T 8/32, B60T 11/04, B60T 17/10

(54) **Verfahren für eine blockiergeschützte Bremsung sowie Bremsvorrichtung für ein zweiachsiges Fahrzeug**
Process for antilock braking with Apparatus for a twin-axle vehicle
Procédé de freinage sans blockage et dispositif de freinage pour un véhicule à deux essieux

(30) Priorität: 19.07.1989 DE 3923955; 07.11.1989 DE 3937070
(43) Veröffentlichungstag der Anmeldung: 03.07.1991
(73) Patentinhaber: LUCAS INDUSTRIES public limited company, Birmingham, B19 2XF West Midlands (GB)
(72) Erfinder: RATH, Heinrich-Bernhard, D-5414 Vallendar (DE)
(74) Vertreter: von Hellfeld, Axel, Dr. Dipl.-Phys.
(86) Internationale Anmeldenummer: EP9001165
(87) Internationale Veröffentlichungsnummer: WO9101235

(56) Entgegenhaltungen:
- EP-A- 0 065 151
- EP-A- 0 288 846
- DE-A- 3 133 442
- DE-A- 3 312 980
- DE-A- 3 313 078
- DE-A- 3 728 480

## Beschreibung

Die Erfindung betrifft ein Verfahren für eine blockiergeschützte Bremsung eines zumindest zweiachsigen Fahrzeuges mit den Merkmalen der Oberbegriffe der Patentansprüche 1 und 9 sowie eine Bremsvorrichtung gemäß dem Oberbegriff des Patentanspruches 15.

Solche Bremsverfahren und -vorrichtungen benötigen Sensoren, Schaltungen und Steuermittel, die als solche allgemein bekannt sind, siehe z.B. DE-A-33 12 980. Dort werden unterschiedliche Ansprechschwellen beim Abbremsen der einzelnen Räder dadurch ausgeglichen, daß die Anfangsdruckhöhe des Bremsdruckes von Vorder- zu Hinterachse durch eine Zurückhaltung des Druckes derart gewechselt wird, daß sich eine in einem vorgegebenen Rhythmus ändernde Zusatzbeanspruchung der Radbremsen ergibt.

Bei herkömmlichen Bremssystemen, ob elektronisch geregelt oder nicht, kommt es zu einer ungleichmäßigen Abnutzung der Bremsbeläge an den Bremsen der Vorder- und Hinterräder. Die Bremsbeläge der Vorderradbremsen werden aufgrund der beim Bremsen in aller Regel erfolgenden teilweisen Verlagerung des Fahrzeuggewichtes auf die Vorderachse stärker belastet als die Bremsbeläge der Hinterradbremsen. Dies führt zu einem ungleichmäßigen Verschleiß der Bremsbeläge, so daß die Frequenz des Belagwechsels höher ist als bei einem Fahrzeug, bei dem sich alle Bremsbeläge gleichmäßig abnutzen und auf einmal ausgetauscht werden können.

Ziel der Erfindung ist es, ein Bremsverfahren der eingangs genannten Art so auszugestalten, daß die Bremsbeläge eine möglichst hohe, gleichmäßige Lebensdauer aufweisen.

Ein erfindungsgemäßes Bremsverfahren zur Erreichung dieses Ziels ist im Patentanspruch 1 beschrieben. Vorteilhafte Ausgestaltungen finden sich in den Unteransprüchen 2 bis 8.

Der Erfindung liegt die Erkenntnis zugrunde, daß bei Kraftfahrzeugen, insbesondere PKW, während eines normalen Fahrbetriebs weitaus mehr als 90 % aller Abbremsungen die Bremsen relativ gering in Anspruch nehmen. Typischerweise erfolgen weit weniger als 10 % aller Abbremsungen mit einer so starken Bremskraft, daß die Verzögerung des Fahrzeuges in einem Bereich oberhalb von 0,2 g liegt. Bei den üblichen Haftbeiwerten (auch Bremskraftbeiwerte genannt und mit µ bezeichnet) oberhalb von 0,4 könnten deshalb bei praktisch allen gängigen PKW-Modellen die Abbremsungen mit einer Fahrzeugverzögerung von weniger als 0,2 g ausschließlich über die Hinterachse des Fahrzeuges erfolgen.

Die Erfindung macht sich diese Erkenntnis zunutze und erreicht einen gleichmäßigen Verschleiß aller Bremsbeläge des Fahrzeuges dadurch, daß die Bremsen der Hinterräder des Fahrzeuges in "unkritischen" Bremssituationen mit einer Bremskraft beaufschlagt werden, die größer ist als die an den Bremsen der Vorderräder zur gleichen Zeit herrschende Bremskraft. Liegt der "unkritische" Bremszustand nicht mehr vor, zum Beispiel deshalb, weil der Fahrer die Bremse kräftiger betätigt und/oder weil aufgrund der Straßenverhältnisse an den gebremsten Rädern eine Blockierneigung auftritt, wird die erfindungsgemäß vorgesehene erhöhte Belastung der Hinterradbremsen sofort aufgehoben und sämtliche Bremsen des Fahrzeuges werden maximal abgebremst, ggf. unter Steuerung durch eine herkömmliche ABS-Anlage.

In einer bevorzugten Ausgestaltung der Erfindung ist vorgesehen, die Bremsen der Hinterräder des Fahrzeuges mit im Vergleich zu den Bremsen der Vorderräder größeren und/oder verschleißfesteren Bremsbelägen zu versehen. Die erfindungsgemäß vorgesehene erhöhte Belastung der Bremsen der Hinterräder im Vergleich mit den Bremsen der Vorderräder führt dann dazu, daß die Bremsbeläge insgesamt nach einer Vielzahl von Bremsungen mit statistischer Verteilung der Bremskräfte gleichmäßig abgenutzt sind und insgesamt nach einer relativ langen Lebensdauer ausgetauscht werden können.

Bei Realisierung des Erfindungsgedankens ist es erforderlich, festzustellen, wann die Bremsung den obengenannten "unkritischen" Zustand verläßt und kritisch wird, d.h. einen optimalen Einsatz aller Bremsmittel zur Erzielung eines möglichst kurzen Bremsweges erfordert. Für die Ermittlung eines solchen Übergangs von einem unkritischen in einen kritischen Zustand stehen verschiedene Kriterien zur Verfügung. Dies sind vornehmlich die Drehverzögerungen der erfindungsgemäß bei Beginn einer Bremsung zunächst mit im Vergleich mit den Vorderradbremsen mit erhöhter Bremskraft beaufschlagten Hinterräder. Überschreitet die Drehverzögerung eines der Hinterräder einen vorgegebenen Wert (entsprechend z.B. 0,2 g), so zeigt dies an, daß der Fahrer eine starke Bremsung herbeiführen will und/oder daß die Straßenverhältnisse relativ ungünstig sind, so daß die erfindungsgemäße Bremsvorrichtung sofort so umgestellt wird, daß alle verfügbaren Bremsen mit optimalem Bremsdruck betätigt werden.

Die Mittel, mit denen die Bremsdrucke an den einzelnen Bremsen der Räder steuerbar sind, sind heute dem Fachmann allgemein bekannt, insbesondere aus der ABS-Regeltechnik. Die Erfindung eignet sich deshalb besonders dazu, mit einer als solche bekannten ABS-Regelanlage verwirklicht zu werden.

Als Kriterium dafür, ob ein im obigen Sinne "unkritischer" oder ein "kritischer" Bremszustand vorliegt kann zusätzlich oder alternativ zur Drehverzögerung der Hinterrräder die Geschwindigkeit herangezogen werden, mit welcher der Fahrer das Bremspedal des Fahrzeuges betätigt. Hierzu kann bei Beginn einer Bremsung der Pedalweg pro Zeiteinheit oder auch der Gradient gemessen werden, mit dem der Druck der Hydraulikflüssigkeit in dem Hauptzylinder der Bremsanlage ansteigt. Liegt die Betätigungsgeschwindigkeit der Pedale bzw. der Gradient des Anstiegs des Bremsdruckes über einem vorgegebenem Wert, so erfolgt die ansonsten erfindungsgemäß vorgesehene Bevorzugung der Hinterradbremsen nicht sondern von vorne herein eine maximale Verwendung aller Bremsen einschließlich der Vorderradbremsen.

In einer bevorzugten Ausgestaltung der Erfindung ist vorgesehen, daß bei Beginn einer Bremsung die Druck-Steuermittel den Bremsen der Vorderräder (solange die Drehverzögerung der Hinterräder unter dem vorgegebenem Wert bleibt) nur einen relativ geringen Druck zuführen, der nur zu einem Anlegen der Bremsbacken ohne merkliche Bremswirkung führt. Dieser sogenannte "Anlegedruck" (z.B. 4 bar) bewirkt, daß die Bremsen der Vorderräder nach Beginn der Bremsung (wenn erfindungsgemäß die Bremsen der Hinterräder die Bremsleistung übernehmen) soweit betätigt werden, daß sich die Bremsbeläge gerade an die Bremsscheibe anlegen (bei Einsatz einer heute üblichen Scheibenbremse). Somit werden die Bremsscheiben der Vorderradbremsen und auch die Bremsbeläge von einem möglicherweise anhaftenden Wasserfilm gereinigt und bei einem anschließenden Einsatz (Übergang in einen "kritischen" Bremszustand) sofort mit voller Reibwirkung zur Verfügung stehen.

In einer weiteren bevorzugten Ausgestaltung der erfindungsgemäßen Bremsvorrichtung ist vorgesehen, daß eine mögliche Querbeschleunigung des Fahrzeuges als Steuerparameter herangezogen wird. Mittel zum Bestimmen der Querbeschleunigung eines Fahrzeuges sind als solche bekannt. Auch ist es als solches bekannt, daß sogenannte Giermoment des Fahrzeuges mittels einer ABS-Anlage zu ermitteln. Hierzu werden die gemessenen Drehzahlen der Räder auf gegenüberliegenden Seiten des Fahrzeuges miteinander verglichen und ausgewertet. Ergibt sich eine Querbeschleunigung und/oder ein Giermoment, welches/welche über einem vorgegebenem Wert liegt/liegen, dann wird die ansonsten erfindungsgemäß vorgesehene Betonung der Bremswirkung der Hinterräder gegenüber den Vorderrädern sofort aufgehoben und die Bremsung in herkömmlicher Weise, ggf. ABS-geregelt, durchgeführt.

Vorzugsweise wird die erfindungsgemäß vorgesehene Betonung der Bremswirkung an den Hinterrädern des Fahrzeuges nur dann vorgesehen, wenn die Fahrzeuggeschwindigkeit relativ gering ist, z.B. kleiner als 80 km/h.

Auch die herrschende Außentemperatur kann als Kriterium dafür herangezogen werden, ob die erfindungsgemäß vorgesehene, den Belagverschleiß ausgleichende Betonung der Bremswirkung der Hinterräder eingesetzt wird oder nicht. Fällt nämlich die Außentemperatur unter einen Wert von z.B. 2°C ab, so zeigt dies die Gefahr einer glatten Fahrbahn an, so daß in einer bevorzugten Ausgestaltung der erfindungsgemäßen Bremsanlage vorgesehen ist, die Außentemperatur zu messen und dann eine normale Bremsung ohne die erfindungsgemäße Modifikation durchzuführen.

In einer anderen bevorzugten Ausgestaltung der Erfindung wird mit an sich bekannten Mitteln die Last an der Hinterachse des Fahrzeuges gemessen und ggf. die Last an der Vorderachse. Dies ist insbesondere bei Nutzfahrzeugen mit stark variierenden Hinterachslasten von Vorteil. Nur dann, wenn die Hinterachslast einen vorgegebenen Wert, ggf. im Verhältnis zur Vorderachslast, überschreitet, erfolgt deshalb bei diesem Ausführungsbeispiel der Erfindung eine Betonung der Bremsleistung an den Hinterrädern.

Eine anderes erfindungsgemäßes Bremsverfahren zum Erreichen des oben genannten Ziels der hohen und gleichmäßigen Lebensdauer der Bremsbeläge ist im Patentanspruch 9 beschrieben. Besondere Ausgestaltungen dieses Bremsverfahrens sind den Unteransprüchen 10 bis 14 zu entnehmen.

Auch diese erfindungsgemäße Lösung des eingangs genannten technischen Problems der ungleichmäßigen Abnutzung der Bremsbeläge hat die oben erwähnten Vorteile, die hier deshalb nicht noch einmal aufgeführt werden sollen.

Bei der vorstehend beschriebenen erfindungsgemäßen Lösung wird eine sowieso am Fahrzeug vorgesehene Zusatzbremse verwendet. Die Zusatzbremse (z.B. eine Hand- oder Parkbremse) ist unabhängig vom hydraulischen Bremssteuerkreis betätigbar und wird solange eingesetzt, wie die Drehverzögerung der Hinterräder unter einem vorgegebenen Wert bleibt.

Gemäß einer weiteren Variante der Erfindung, die mit Ausgestaltungen in den Patentansprüchen 15 bis 18 beschrieben ist, wird das eingangs genannte Ziel dadurch erreicht, daß an den Hinterrädern eine Zusatzbremse vorgesehen ist, die ebenfalls vor dem hydraulischen Steuerkreis der Bremsanlage betätigbar ist und die solange betätigt wird, wie die Drehverzögerung der Hinterräder unter einem vorgegebenen Wert bleibt.

Als Zusatsbremse an den Hinterrädern kommt bei einer Sattel-Scheibenbremse ein zweiter Stattel auf der gleichen Scheibe der Bremse des Hinterrades in Betracht, oder es kann auch eine zweite Scheibe an jeder Bremse vorgesehen werden, die jeweils mit einem gesonderten Sattel versehen ist. Bei einer Trommelbremse kann eine zusätzliche Trommel für die Zusatzbremse vorgesehen werden.

Nachfolgend werden Ausführungsbeispiele der Erfindung anhand der Zeichnung näher erläutert. In der Zeichnung zeigt:
- Fig. 1: zeigt schematisch eine Bremsvorrichtung mit für die Erfindung wesentlichen Bauteilen;
- Fig. 2: schematisch eine Zusatzbremse im Schnitt;
- Fig. 3: ein weiteres Ausführungsbeispiel einer Zusatzbremse im Schnitt und
- Fig. 4: schematisch einen einzigen hydraulischen Steuerkreis einer Vierkanal-ABS-Bremsanlage mit Diagonalaufteilung.

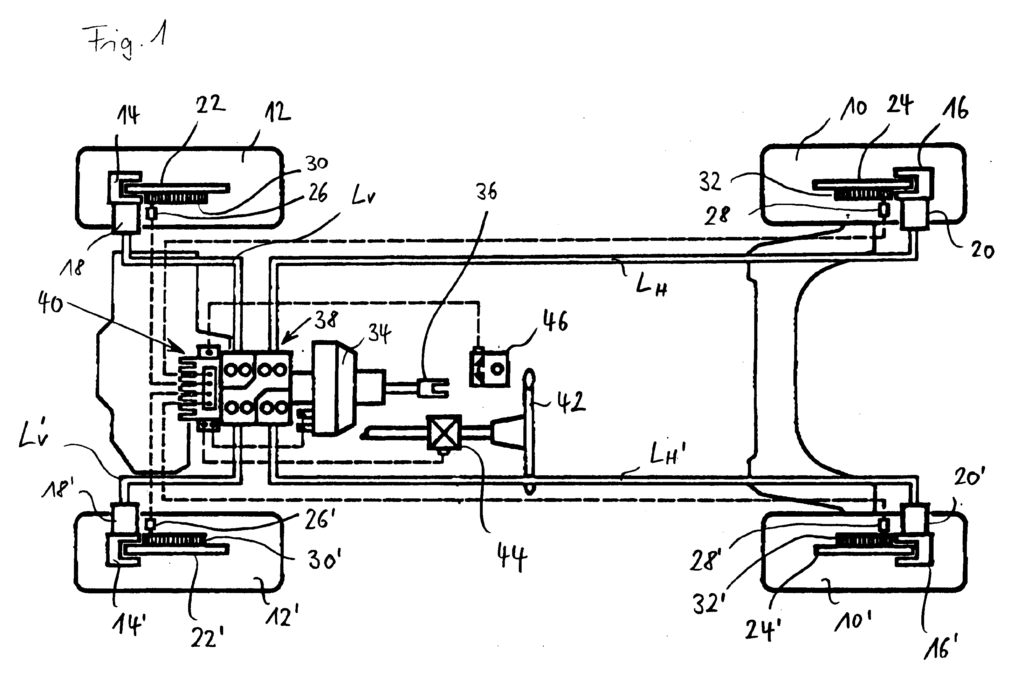

Die dargestellte Bremsvorrichtung gemäß Fig. 1 wird bei einem PKW mit Hinterrädern (10, 10') und Vorderrädern (2, 12') eingesetzt. Die Vorderräder sind mit Scheibenbremsen (14, 14') und die Hinterräder mit Scheibenbremsen (16, 16') versehen.

Die Bremsen weisen jeweils als solche ebenfalls bekannte Bremszylinder (18, 18') bzw. (20, 20') und Bremsscheiben (22, 22') bzw. (24, 24') auf.

Jedes der Räder (10, 10'), (12, 12') ist mit einem als solche ebenfalls bekannten Drehzahlsensor (26, 26') bzw. (28, 28') versehen. Die Drehzahlsensoren beruhen in bekannter Weise auf dem Prinzip der elektromagnetischen Induktion, wobei ein sich mit den Rädern drehender Drehkranz (30, 30') bzw. (32, 32') entsprechend der Drehgeschwindigkeit des Rades im Drehzahlsensor ein Signal induziert.

Weiterhin weist die Bremsanlage in herkömmlicher Weise einen Hauptbremszylinder (36) auf, sowie einen Druckverteiler (38), mit dem die Verteilung des Mittels des Hauptbremszylinders erzeugten Bremsdruckes auf die einzelnen Bremszylinder (18, 18') und (20, 20') gesteuert wird. Der mittels des Hauptbremszylinders erzeugte Druckanstieg der Hydraulikflüssigkeit der Bremsanlage wird mittels einer Meßeinrichtung (34) gemessen. Die Meßeinrichtung (34) ermittelt die Rate, mit welcher der Hydraulikdruck des Hauptbremszylinders (36) pro Zeiteinheit ansteigt. Die Bremsdrucke werden mittels Hydraulik-Leitungen Lᵥ, L'ᵥ (Vorderräder) und L_{H}, L'_{H} (Hinterräder) übertragen.

In einer besonders einfachen Ausgestaltung der Bremsanlage kann eine sogenannte "Panikbremsung" des Fahrers (also eine Notbremsung, in der eine maximale Bremswirkung erforderlich ist) auch dadurch festgestellt werden, daß der Pedalweg bei einer Panikbremsung in aller Regel deutlich größer ist als bei einer relativ schwachen Bremsung. In dieser einfachen Ausgestaltung der Erfindung ist deshalb ein elektrischer Schalter mit dem Pedal so verbunden, daß bei einer besonders heftigen und weiten Pedalbewegung ein Signal erzeugt wird, welches eine Panikbremsung anzeigt.

Eine als solche ebenfalls bekannte ABS-Steuerschaltung (40) erhält über gestrichelt angedeutete Leitungen Drehzahlsignale von den Drehzahlsensoren (26, 26'), (28, 28') und wertet diese in bekannter Weise unter Bildung insbesondere eines Drehverzögerungssignals aus.

Ein Lenkrad (42) des Fahrzeuges betätigt einen Lenkwinkelsensor (44), dessen Ausgangssignal ebenfalls in die ABS-Steuerschaltung (40) eingegeben wird. Zusätzlich kann noch ein gesonderter, als solcher ebenfalls bekannter Querbeschleunigungssensor (46) vorgesehen sein, dessen Ausgangssignal in die ABS-Steuerschaltung (40) eingegeben wird.

Querbeschleunigungssensoren sind als solche bekannt. Es ist auch bekannt, mit einer ABS-Anlage ohne ein gesondertes Meßinstrument die Querbeschleunigung und auch das sogenannte Giermoment zu bestimmen. hierzu werden die Drehzahlen von Rädern auf der linken und der rechten Fahrzeugseite (in Fahrtrichtung gesehen) miteinander verglichen.

Die Funktion der in der Fig. 1 gezeigten Bremsvorrichtung ist wie folgt.

Erhöht der Fahrer des Fahrzeuges mittels eines (nicht gezeigten) Bremspedals in bekannter Weise den Druck im Hauptbremszylinder (36), so mißt die Meßeinrichtung (34) den Druckanstieg pro Zeiteinheit (Gradienten). Der Meßwert wird in die ABS-Steuerschaltung (40) eingegeben und dort mit einem vorgegebenen Vergleichswert verglichen. Übersteigt der Gradient des Druckanstiegs bei Beginn einer Bremsung einen vorgegebenen Wert nicht, so erfolgt die Steuerung der Bremsdrücke an den Scheibenbremsen (14, 14'; 16, 16') erfindungsgemäß. Übersteigt der Gradient des Druckanstiegs einen vorgegebenen Wert, so erfolgt die Steuerung der Bremsdrucke an den Scheibenbremsen nicht erfindungsgemäß.

Weiterhin wird der Querbeschleunigungszustand des Fahrzeuges gemessen. Übersteigt die mittels des Querbeschleunigungssensors (46) gemessene Querbeschleunigung und/oder der mittels des Lenkwinkelsensors (44) gemessene Lenkwinkeleinschlag und/oder ein gemessenes Giermoment einen vorgegeben Wert oder wird eine Panikbremsung festgestellt, erfolgt keine erfindungsgemäße Steuerung der Bremsdrucke. Übersteigen der Lenkwinkeleinschlag und die Querbeschleunigung nicht vorgegebene Vergleichswerte und liegt keine Panikbremsung vor, so erfolgt die Steuerung der Bremsdrücke erfindungsgemäß. Mit den vorstehenden Begriffen "erfindungsgemäß" ist die oben und nachfolgend beschriebene Steuerung gemeint. Mit dem begriff "nicht erfindungsgemäß" ist eine herkömmliche mit Bremsdruck-Erzeugung an allen vier Bremsen (14, 14'; 16, 16') gemeint, ggf. mit ABS-Regelung.

Erfolgt die Steuerung der Bremsdrucke erfindungsgemäß, so werden zunächst nur die Bremsen (16, 16') der Hinterräder (10, 10') über die Leitungen L_{H}, L'_{H} mit Bremsdruck versorgt. Die ABS-Steuerschaltung (40) steuert entsprechende Ventile des Druckverteilers (38). Gleichzeltig wird den Scheibenbremsen (14, 14') der Vorderräder (12, 12') ein Druck über die Leitungen Lᵥ, L'ᵥ zugeführt, der so gering ist, daß die Bremsen gerade anlegen, also die Bremsbeläge die Bremsscheiben (22, 22') gerade berühren und vorhandene Flüssigkeiten entfernt werden, welche eine spätere Bremswirkung beeinträchtigen könnten.

Die ABS-Steuerschaltung (40) empfängt periodisch von den Drehzahlsensoren (26, 26'; 28, 28') Drehzahlsignale und wertet diese aus. Da zunächst nur die Hinterräder (10, 10') abgebremst werden, kann auch nur ihre Drehverzögerung einen in der ABS-Steuerschaltung (40) abgespeicherten Vergleichswert von z.B. 0,2 g überschreiten. Ist dies der Fall, wird die Drosselung der Bremsdruck-Zufuhr zu den Bremsen (14, 14') der Vorderräder (12, 12') sofort aufgehoben und die Vorderräder werden in herkömmlicher Weise unter Steuerung durch die ABS-Steuerschaltung (40) mit maximal möglichem Bremsdruck gebremst. Entsprechendes gilt für die Hinterräder (10, 10').

Zeigen während einer Bremsung der Lenkwinkelsensor (44) und/oder der Querbeschleunigungssensor (46) an, daß das Fahrzeug eine Querbeschleunigung erfährt, leitet die ABS-Steuerschaltung (40) ebenfalls sofort eine "normale" Bremsung ein, ggf. mit ABS.

Weiterhin wird die Fahrzeuggeschwindigkeit laufend gemessen. Übersteigt die gemsene Fahrzeuggeschwindigkeit einen vorgegebenen Wert von z.B. 80 km/h so erfolgt die Bremsung ebenfalls in "nicht erfindungsgemäßer" Weise, also mit Regelung.

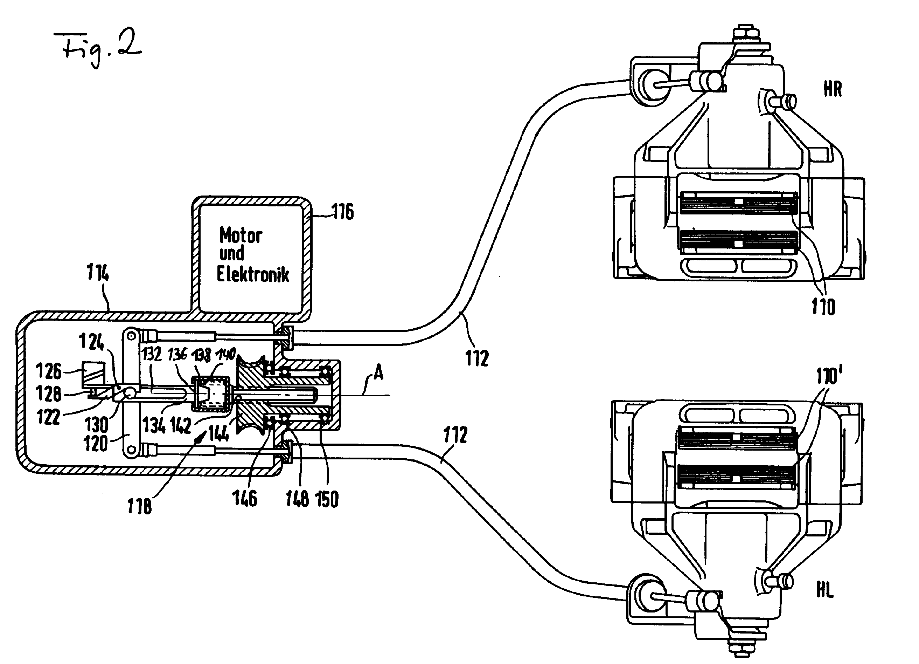

Die in der Fig.2 gezeigte Zusatzbremse wirkt in an sich bekannter Weise auf Bremsbacken 110, 110' der Bremsen HR des rechten Hinterrades und HL des linken Hinterrades. Die Bremskraft wird mittels eines Bowdenzuges 112 übertragen.

In einem Gehäuse 114 sind die Bauelemente angeordnet, die zum Erzeugen einer Kraft am Bowdenzug 112 erforderlich sind. Der Antrieb zum Erzeugen der Kräfte ist in einem Gehäuse 116 angeordnet.

Die Mittel zum Erzeugen einer über den Bowdenzug 112 übertragbaren Bremskraft sind mit dem Bezugszeichen 118 bezeichnet. Beide Stränge des Bowdenzuges 112 hängen jeweils an den Enden eines Waagebalkens 120. Ein Sperrhebel 122 hält den Waagebalken 120 in der in der Fig. 2 gezeigten linken Stellung. Der Sperrhebel 122 schwenkt um eine Achse 124. Mit einem Solenoid 126 ist ein Stössel 128 bewegbar, der den Sperrhebel 122 beaufschlagt. Wird der Stößel 128 vom Solenoid 126 in der Fig. 2 nach unten gestoßen, so schwenkt der Hebel 122 gegen den Uhrzeigersinn um die Achse 124 und gibt den Waagebalken frei. Die in der Fig. 2 gezeigte Stellung ist die "Normalstellung" des Waagebalkens 120. In dieser Stellung hintergreift der Sperrhebel 122 einen fest mit dem Waagebalken 120 verbundenen Stift 130. Der Stift 130 ist unter besonderen, weiter unten näher beschriebenen Umständen, in einem Langloch 132 verschiebbar, das in einem Gabelkopf 134 ausgebildet ist, welcher den Waagebalken 120 beidseitig umfaßt.

Am dem Waagebalken gegenüberliegenden Ende ist der Gabelkopf 134 mit einem beschlag 136 versehen, der in einem Käfig 138 angeordnet. Zwischen dem Anschlag 136 und einem diesem in Richtung der Längsachse der Betätigungseinrichtung 118 gegenüberliegenden Ende des Käfigs 138 ist eine Wendelfeder 140 eingespannt. Die Feder drängt in der in der Fig. 2 gezeigten Stellung unter Vorspannung den Anschlag 136 nach links gegen einen Anschlag am Käfig 138.

Mit dem Käfig 138 ist eine Stange 142 verbunden, die mit einem Außengewinde versehen ist. Mit der Stange 142 wirkt ein Schneckentrieb 144 zusammen, der um die Achse A drehbar ist und dabei die Stellung der Stange 142 und des Käfigs 138 in Richtung der Längsachse verändert. Der Schneckentrieb 144 wird mittels eines Elektromotors, der im Gehäuse 116 angeordnet ist, gedreht. Dreht der Schneckentieb 144 in einer bestimmten Richtung, so wird die Stange 142 in der Fig. 2 nach links bewegt. Mit der Stange 142 bewegt sich auch der Käfig 138 nach links. Die Feder 140 ist so stark vorgespannt, daß sie zunächst ihre in der Fig. 2 gezeigte Stellung nicht verändert und den beschlag 136 am Gabelkopf in der äußerst linken Position hält. Deshalb bewegt sich mit einer Drehung des Schneckentriebs 144 auch der Gabelkopf 134 nach links. Da der Sperrhebel 122 in der gezeichneten Sperrstellung ist, wird auch der Waagebalken nach links bewegt und erzeug über den Bowdenzug 112 Bremskräfte an den beiden Bremsen HR bzw. HL der Hinterräder des zweiachsigen Fahrzeuges. Die Feder 140 weist eine solche Spannkraft auf, daß eine gewünschte, hinreichende mechanische Abbremsung der beiden Hinterräder erfolgt. Beispielsweise kann die Feder 140 so ausgelegt sein, daß sie bei einem Personenkraftwagen eine mechanische Abbremsung von etwa 0,4 g ermöglicht.

Der im Gehäuse angeordnete Elektromotor, welcher den Schneckentrieb 144 dreht, kann in zweierlei Weise betätigt werden. Zum einen kann der Fahrer des Kraftfahrzeuges völlig unabhängig von dem hydraulischen Bremssystem (nicht gezeigt) einen entsprechenden Schaltknopf betätigen, so daß der im Gehäuse 116 angeordnete Motor den Schneckentrieb 144 dreht, um eine sogenannte "Handbremsung " oder auch "mechanische Bremsung" zu bewirken. Der Fahrer braucht also hierfür die mechanischen Kräfte nicht selbst aufzubringen. Zum anderen wird aber die mechanische Bremsvorrichtung erfindungsgemäß auch dann eingesetzt, wenn eine "normale" Bremsung des hydraulischen Bremssystems unkritisch im obengenannten Sinne ist, d.h. wenn die Bremswirkung unter einem vorgegebenen Wert liegt und deshalb die Hinterräder weit von einer Blockiergefahr entfernt sind, so daß die Hinterräder mit einer stärkeren Bremskraft beaufschlagt werden können als die Vorderräder. In diesem Falle wird der im Gehäuse 116 angeordnete Motor automatisch bei Betätigung des Bremspedals der hydraulischen Bremsanlage mit betätigt, so daß der Schneckentrieb 144 dreht und über den Bowdenzug 112 Bremskraft erzeugt wird.

Bei einer extrem großen Drehverzögerung und/oder bei einem extrem großen Schlupf der Hinterräder dienen die Bauteile 122 bis 128 dazu, die mechanische Zusatzbremse sofort außer Kraft zu setzen. Zeigen die Drehzahlsensoren der Hinterräder (welche beispielsweise im Rahmen einer üblichen ABS-Regelung verwendet werden) an, daß sich die Hinterräder einem kritischen, eine Blockiergefahr anzeigenden Zustand nähern, so wird sofort das elektromagnetische Solenoid 126 betätigt und der Stößel 128 in der Fig. 2 nach unten gestoßen. Dabei wird der Sperrhebel 122 gegen den Uhrzeigersinn um die Achse 124 verschwenkt und gibt den Stift 130 frei, der fest mit dem Waagebalken verbunden ist. Somit kann sich der Stift 130 im Langloch 132 in der Fig. 2 nach rechts bewegen und der Bowdenzug 112 überträgt keine Bremskraft mehr auf die Bremsen der Hinterräder.

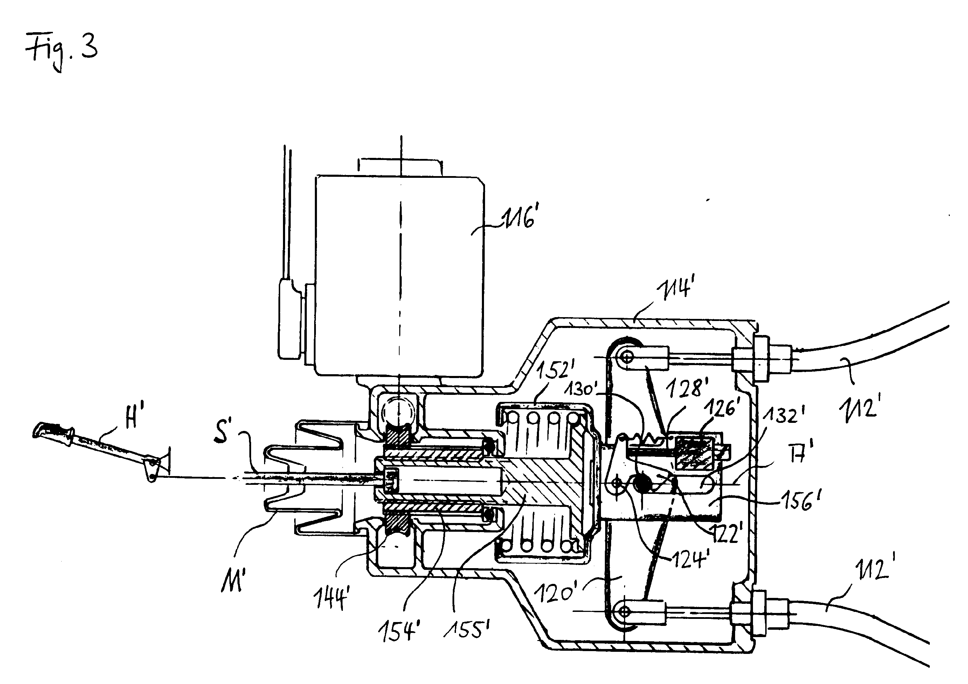

Fig. 3 zeigt eine Abwandlung der vorstehend beschriebenen Zusatzbremse nach Fig. 2. Einander der Funktion nach entsprechende Bauteile sind mit gleichen Bezugszeichen versehen, die um einen Strich ergänzt sind. Zusätzlich zum Ausführungsbeispiel gemäß Fig. 2 zeigt die Fig. 3 noch einen Brems-Handhebel H', der über eine Stange S' mit denjenigen Bauteilen verbunden ist, die auf den Bowdenzug 112' wirken. Die Funktion der Zusatzbremse gemäß Fig. 3 ist sehr ähnlich derjenigen von Fig 2. Der Schneckentrieb 144' verschiebt bei Betätigung des Elektromotors 116' eine Hülse 154' in der Fig. 3 nach links. Die Hülse 154' ist fest verbunden mit einem Gehäuse 152', welches seinerseits fest verbunden ist mit einem Zugkörper 156', an dem beide Bowdenzüge 112' über einen Stift 130' und einen Sperrhebel 122' gemäß der in Fig. 3 gezeigten Stellung befestigt sind. Bei Blockiergefahr oder Gefahr des Verlustes der Lenkstabilität des Fahrzeuges wird über einen Solenoid 126' und einen Stößel 128' der Sperrhebel 122' gegen den Uhrzeigersinn gedrückt, so daß der Stift 130' in dem gezeigten Langloch 132' freikommt und keine Kraft mehr auf die Bowdenzüge 112' übertragen wird.

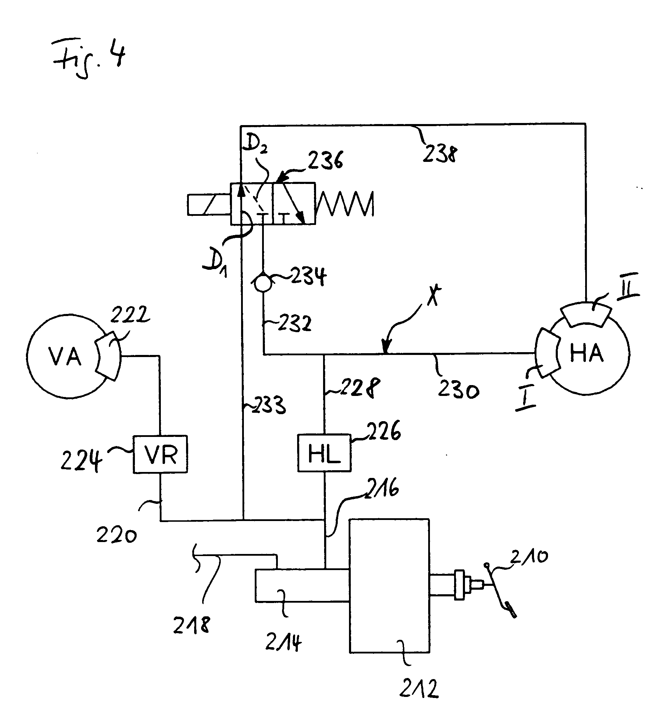

Die Fig. 4 zeigt schematisch einen einzigen hydraulischen Steuerkreis einer Vierkanal-ABS-Bremsanlage mit Diagonalaufteilung.

Bei dem in der Fig. 4 gezeigten Ausführungsbeispiel ist ein Bremspedal 210 mit einem Bremskraftverstärker 212 verbunden und in einem Hauptzylinder 214 wird entsprechend der Pedalkraft und der Verstärkung eine Hydraulikflüssigkeit unter Druck gesetzt.

Aus dem Hauptzylinder 214 werden zwei Leitungen 216, 218 mit Hydraulikflüssigkeit gespeist, wobei in der Fig. 4 nur der von der Leitung 216 versorgte Steuerkreis für die Bremse vorne rechts und die Bremse hinten links ausgeführt ist.

Eine Verzweigung 220 führt von der Leitung 216 zur Bremse 222 vorne links an der Vorderachse VA. In der Leitung 220 ist in herkömmlicher Weise ein ABS-Modulatorteil VR für die Bremse 222 vorne links angeordnet.

Eine Verzweigung 228 führt von der Leitung 216 zu einer ersten Bremse I am rechten Hinterrad der Hinterachse HA. Die Leitung 228 verzweigt sich in eine Leitung 230 und in eine Leitung 232. Die Leitung 230 führt zur ersten Bremse I des rechten Hinterrades.

Weiterhin ist die Leitung 216 direkt mit einer weiteren Leitung 233 verbunden, die zu einem Magnetventil 236 führt. Ist ein Durchlaß D₁ des Magnetventils 236 auf Durchgang geschaltet, so ist die Leitung 233 mit einer Leitung 238 verbunden, die zu einer zweiten Bremse II am rechten Hinterrad führt.

Die Bremsen I und 11 sind jeweils als Bremssättel ausgebildet, die beide auf die gleiche Scheibe wirken.

Die Funktion der in der Fig. 4 gezeigten Bremsen I und 11 ist wie folgt:

Bei Einleiten einer Bremsung durch Betätigung des Pedals 210 (wobei die Bremsung noch im obengenannten Sinne "unkritisch" ist) wird über die Leitung 216 in den Leitungen 228 und 233 Druck in der Hydraulikflüssigkeit erzeugt. Mit Betätigung des Pedals 210 wird auch das Magnetventil 236 unter Strom gesetzt und der Durchlaß D₁ geöffnet, so daß über die Leitung 238 auch die Bremse II beaufschlagt wird. Der Modulator HL 226 für eine ABS-Regelung am rechten Hinterrad wird in herkömmlicher Weise in Abhängigkeit von der gemessenen Drehverzögerung und/oder dem Schlupf betrieben.

Der Modulator VR224 schließt bei z.B. 4 bar, so daß die Bremse am Vorderrad nur angelegt ist, ohne starke Bremswirkung zu erzeugen.

Überschreitet nun die Fahrzeugverzögerung (in herkömmlicher Weise aus der Drehverzögerung ermittelt) einen vorgegebenen Schwellenwert von z.B. 0,2 g, so wird vom zentralen ABS-Rechner ein Steuerbefehl an das Magnetventil 236 gegeben, so daß gleichzeitig der Durchlaß D₁ gesperrt und ein Durchlaß D₂ geöffnet wird. Der Durchlaß D₂ verbindet die Leitung 238 über ein Rückschlagventil 234 mit der Leitung 232, die zur ersten Bremse I führt. Erreicht also die Bremsung des Fahrzeuges den vorgegebenen kritischen Wert von z.B. 0,2 g, so werden die beiden am rechten Hinterrad vorgesehenen Bremsen I und II hydraulisch "kurzgeschlossen", d.h. sie werden beide nur noch unter Steuerung durch den ABS-Modulator 226 mit Bremsdruck versorgt.

Beim Umschalten vom geöffneten Durchlaß D₁ auf den geöffneten Durchlaß D₂ entspannt sich die Hydraulikflüssigkeit in der Bremse II in die Bremse I, falls die Bremse I zuvor mit geringerem Bremsdruck beaufschlagt worden war als die Bremse II.

Erfolgt dann eine ABS-Regelung, so wird mittels des Modulators 226 sowohl der Druck in der Bremse I als auch in der Bremse II gehalten oder abgebaut. Entsprechend steuert der Modulator 224 den Druck in der Bremse des diagonal angeordneten rechten Vorderrades.

Erkennt dann der ABS-Rechner, daß kein "ABS-Regelfall" vorliegt (d.h. keine Blockierneigung des rechten Hinterrades) und die Fahrzeugverzögerung kleiner ist als der vorgegebene Wert von 0,2 g, so wird der Durchlaß D₁ wieder geöffnet und die Bremse II direkt über die Leitung 233 mit Druck versorgt.

An der Stelle X in der Leitung 230 kann ein als solches bekanntes Druckreduzierventil angeordnet werden, das in der beschriebenen Weise über die Leitungen 233, 238 umgangen werden kann.

## Patentansprüche

1. Verfahren für eine blockiergeschützte Bremsung eines zumindest zweiachsigen Fahrzeuges mit Drehzahlsensoren (26, 26', 28, 28') an zumindest den Hinderrädern des Fahrzeuges und mit einer Schaltung zum Auswerten der Drehzahlen und zum Ermitteln der Drehverzögerung der Hinterräder, sowie mit einer Einrichtung zum Steuern der Bremskräfte an den Rädern der zwei Achsen, dadurch **gekennzeichnet,** daß bei einer Bremsung an den Bremsen (16, 16') der Hinterräder (10, 10') des Fahrzeuges eine Bremskraft erzeugt wird, die solange gröber ist als die an den Bremsen (14, 14') der Vorderräder (12, 12') erzeugte Bremskraft, wie die Drehverzögerung der Hinterräder (10, 10') unter einem vorgegebenen Wert bleibt.

2. Verfahren nach Anspruch 1,
dadurch **gekennzeichnet**, daß bei Beginn einer Bremsung Druck-Steuermittel den Bremsen (14, 14') der Vorderräder (12, 12') einen Druck zuführen, der nur dem Anlegedruck der Bremsen der Vorderräder entspricht, solange die Drehverzögerung der Hinterräder (10, 10') unter einem vorgegebenem Wert bleibt.

3. Verfahren nach einem der Ansprüche 1 oder 2 mit Mitteln (46) zum Feststellen einer Querbeschleunigung des Fahrzeuges, dadurch **gekennzeichnet,** daß den Bremsen der Hinterräder der gegenüber dem an den Bremsen der Vorderräder herrschenden Druck größere Bremsdruck solange zugeführt wird, wie das Fahrzeug keine Querbeschleunigung erfährt.

4. Verfahren nach Anspruch 3,
dadurch **gekennzeichnet,** daß eine Einrichtung (44) zum Feststellen des Lenkwinkels einer Lenkeinrichtung des Fahrzeuges vorgesehen ist und daß den Bremsen der Hinterräder der gegenüber dem an den Bremsen der Vorderräder herrschenden Druck gröbere Bremsdruck nur zugeführt wird, wenn der Lenkwinkel einen vorgegebenen Wert nicht überschreitet.

5. Verfahren nach Anspruch 3 oder 4,
dadurch **gekennzeichnet,** daß dann, wenn das Fahrzeug eine Querbeschleunigung erfährt, den Bremsen der Vorder- und Hinterrädern Bremsdruck zugeführt wird.

6. Verfahren nach einem der vorhergehenden Ansprüche, wobei das Fahrzeug eine Einrichtung zum Messen seiner Geschwindigkeit aufweist,
dadurch **gekennzeichnet,** daß den Bremsen der Hinterräder nur dann ein Bremsdruck zugeführt wird, der größer ist als der an den Bremsen der Vorderräder herrschende Druck, wenn die Geschwindigkeit des Fahrzeuges unter einem vorgegebenen Wert liegt.

7. Verfahren nach einem der vorhergehenden Ansprüche mit einer Messung des Gradienten, mit dem bei Beginn einer Bremsung der Bremsdruck ansteigt,
dadurch **gekennzeichnet**, daß bei Beginn einer Bremsung den Bremsen der Hinterräder nur dann ein gegenüber dem an den Bremsen der Vorderräder herrschenden Bremsdruck erhöhter Bremsdruck zugeführt wird, wenn der genannte Gradient geringer ist als ein vorgegebener Wert.

8. Verfahren nach einem der vorhergehenden Ansprüche, bei dem die Hinterachslast gemessen wird,
dadurch **gekennzeichnet**, daß bei Beginn einer Bremsung den Bremsen der Hinterräder nur dann ein Bremsdruck zugeführt wird, der gröber ist als der an den Bremsen der Vorderräder herrschende Druck, wenn die Hinterachslast einen vorgegebenen Wert überschreitet.

9. Verfahren für eine blockiergeschützte Bremsung eines zumindest zweiachsigen Fahrzeuges mit Drehzahlsensoren (26, 26', 28, 28') an zumindest den Hinterrädern (10, 10') des Fahrzeuges und einer Schaltung zum Auswerten der Drehzahlen und zum Ermitteln der Drehverzögerung der Räder, wobei das Fahrzeug mit einem hydraulischen, auf die Bremsen der Vorder- (14, 14') und Hinterräder (16, 16') wirkenden Steuerkreis und mit einer unabhängig von dem hydraulischen Steuerkreis betätigbaren, auf die Hinterräder einwirkenden Zusatzbremse versehen ist,
dadurch **gekennzeichnet,** daß bei einer Betätigung des hydraulischen Steuerkreises automatisch auch die Zusatzbremse solange betätigt wird, wie die Drehverzögerung der Hinterräder (10, 10') unter einem vorgegebenen Wert bleibt.

10. Verfahren nach Anspruch 9,
dadurch **gekennzeichnet**, daß die Zusatzbremse eine auch unabhängig von einer Betätigung des hydraulischen Steuerkreises von Hand betätigbare Bremse ist.

11. Verfahren nach einem der Ansprüche 9 oder 10,
dadurch **gekennzeichnet**, daß die Zusatzbremse von Hand auslösbar ist, insbesondere durch einen elektrischen Schaltkontakt.

12. Verfahren nach einem der Ansprüche 9 bis 11,
dadurch **gekennzeichnet**, daß die Zusatzbremse mechanisch mittels eines Servormotors betätigbar ist.

13. Verfahren nach einem der Ansprüche 9 bis 12,
dadruch **gekennzeichnet**, daß die Zusatzbremse als Handbremse durch einen Neigungswinkelsensor aktivierbar ist und daß mittels eines Kupplungsssensors, der ermittelt, ob der Motor des Fahrzeuges eingekuppelt ist, diese Aktivierung aufgehoben wird.

14. Verfahren nach einem der Ansprüche 9 bis 12,
dadurch **gekennzeichnet,** daß bei einer Bremsbetätigung die Zusatzbremse betätigt wird, wenn eine am Bremspedal gemessene Betätigungskraft unterhalb eines vorgegebenen Wertes liegt.

15. Bremsvorrichtung für ein zumindest zweiachsiges Fahrzeug mit Drehzahlsensoren (26, 26', 28, 28') an zumindest den Hinterrädern des Fahrzeuges und einer Schaltung zum Auswerten der Drehzahlen und zum Ermitteln der Drehverzögerung der Räder und einem hydraulischen, auf die Bremsen der Vorder- (14, 14') und Hinterräder (16, 16') wirkenden Steuerkreis,
dadurch **gekennzeichnet,** daß an den Hinterrädern (10, 10') eine Zusatzbremse vorgesehen ist, die ebenfalls von dem hydraulischen Steuerkreis betätigbar ist und die so lange betätigt wird, wie die Drehverzögerung der Hinterräder unter einem vorgegebenen Wert bleibt.

16. Bremsvorrichtung nach Anspruch 15 mit jeweils Scheibenbremsen an den Hinterrädern,
dadurch **gekennzeichnet**, daß jedes der Hinterräder (10, 10') mit einer Zusatzbremse in Form eines zweiten Sattels versehen ist.

17. Bremsvorrichtung nach Anspruch 15 mit Scheibenbremsen an den Hinterrädern,
dadurch **gekennzeichnet**, daß als Zusatzbremse jeweils eine zweite Scheibe mit einem Bremssattel vorgesehen ist.

18. Bremsvorrichtung nach Anspruch 15 mit jeweils an den Hinterrädern vorgesehenen Trommelbremsen,
dadurch **gekennzeichnet,** daß als Zusatzbremse an den Hinterrädern jeweils eine zusätzliche Trommel vorgesehen ist.

## Claims

1. Method for an antilock braking of an at least two-axle vehicle having rotational speed sensors (26, 26', 28, 28') at least at the rear wheels of the vehicle and a circuit for evaluating the rotational speeds and determining the rotational deceleration of the rear wheels, and a means for controlling the braking forces at the wheels of the two axles,
characterized in that during a braking at the brakes (16, 16') of the rear wheels (10, 10') of the vehicle a braking force is generated which is greater than the braking force generated at the brakes (14, 14') of the front wheels (12, 12') for as long as the rotational deceleration of the rear wheels (10, 10') remains beneath a predetermined value.

2. Method according to claim 1,
characterized in that at the start of a braking pressure control means supply to the brakes (14, 14') of the front wheels (12, 12') a pressure which corresponds only to the application of the brakes of the front wheels as long as the rotational deceleration of the rear wheels (10, 10') remains below a predetermined value.

3. Method according to claim 1 or 2 with means (46) for detecting a transverse acceleration of the vehicle,
characterized in that the brake pressure greater than the pressure obtaining at the brakes of the front wheels is supplied to the brakes of the rear wheels as long as the vehicle undergoes no transverse acceleration.

4. Method according to claim 3,
characterized in that a means (44) is provided for detecting the steering angle of a steering means of the vehicle and that the brake pressure greater than the pressure obtaining at the brakes of the front wheels is supplied to the brakes of the rear wheels only if the steering angle does not exceed a predetermined value.

5. Method according to claim 3 or 4,
characterized in that when the vehicle undergoes a transverse acceleration braking pressure is supplied to the brakes of the front and rear wheels.

6. Method according to any one of the preceding claims, the vehicle comprising a means for measuring its velocity,
characterized in that a braking pressure which is greater than the pressure obtaining at the brakes of the front wheels is supplied to the brakes of the rear wheels only if the velocity of the vehicle lies beneath a predetermined value.

7. Method according to any one of the preceding claims comprising a means for measuring the gradient with which the braking pressure rises on starting a braking,
characterized in that at the start of a braking a braking pressure greater than the braking pressure obtaining at the brakes of the front wheels is supplied to the brakes fo the rear wheels only if said gradient is less than a predetermined value.

8. Method according to any one of the preceding claims for a vehicle which is provided with a means for measuring at least the rear axle load,
characterized in that on starting a braking a braking pressure which is greater than the pressure obtaining at the brakes of the front wheels is supplied to the brakes of the rear wheels only if the rear axle load exceeds a predetermined value.

9. Method for an antilock braking of an at least two-axle vehicle having speed sensors (26, 26'; 28, 28') at least at the rear wheels (10, 10') of the vehicle and a circuit for evaluating the rotational speeds and for determining the rotational deceleration of the wheels, the vehicle being provided with a hydraulic control circuit acting on the brakes of the front (14, 14') and rear wheels (10, 10') and an auxiliary brake acting on the rear wheels and actuable independently of the hydraulic control circuit,
characterized in that on actuation of the hydraulic control circuit the auxiliary brake is automatically also actuated for as long as the rotational deceleration of the rear wheels (10, 10') remains below a predetermined value.

10. Method according to claim 9,
characterized in that the auxiliary brake is a brake which can be manually actuated also independently of an actuation of the hydraulic control circuit.

11. Method according to claim 9 or 10,
characterized in that the auxiliary brake is activatable by hand, in particular by an electrical switching contact.

12. Method according to any one of claims 9 to 11,
characterized in that the auxiliary brake is mechanically actuable by means of a servo motor.

13. Method according to any one of claims 9 to 12,
characterized in that the auxiliary brake is activatable as handbrake by an inclination angle sensor and that by means of a coupling sensor determining whether the engine of the vehicle is engaged said activation is cancelled.

14. Method according to any one of claims 9 to 12,
characterized in that on a brake actuation the auxiliary brake is actuated if an actuating force measured the brake pedal lies beneath a predetermined value.

15. Brake apparatus for an at lest two-axle vehicle having rotational speed sensors (26, 26'; 28, 28') at least at the rear wheels of the vehicle and a circuit for evaluating the rotational speeds and for determining the rotational deceleration of the wheels and a hydraulic control circuit acting on the brakes of the front (14, 14') and rear wheels (10, 10'),
characterized in that at the rear wheels (10, 10') an auxiliary brake is provided which is likewise actuable by the hydraulic control circuit and is actuated for as long as the rotational deceleration of the rear wheels remains below a predetermined value.

16. Brake apparatus according to claim 15 with disc brakes at each of the rear wheels,
characterized in that each of the rear wheels (10, 10') is provided with an auxiliary brake in the form of a second caliper.

17. Brake apparatus according to claim 15 with disc brakes at each of the rear wheels,
characterized in that as auxiliary brake in each case a second disc with brake caliper is provided.

18. Brake apparatus according to claim 15 having drum brakes provided at each of the rear wheels, characterized in that as auxiliary brake at each end of the rear wheels an additional drum is provided.

## Revendications

1. Procédé pour le freinage avec protection contre le blocage des roues d'un véhicule possédant au moins deux essieux avec des capteurs de vitesse de rotation (26, 26', 28, 28') sur au moins les roues arrière du véhicule et avec un circuit pour exploiter les vitesses de rotation et déterminer la décélération angulaire des roues arrière, ainsi qu'avec un dispositif pour régler les forces de freinage sur les roues des deux essieux, caractérisé en ce que, lors d'un freinage, la force de freinage produite sur les freins (16, 16') des roues arrière (10, 10') du véhicule, est supérieure à la force de freinage produite sur les freins (14, 14') des roues avant (12, 12') tant que la décélération angulaire des roues arrière (10, 10') reste au-dessous d'une valeur prédéterminée.

2. Procédé selon la revendication 1, caractérisé en ce que, au début d'un freinage, des moyens de réglage de la pression appliquent aux freins (14, 14') des roues avant (12, 12') une pression qui correspond seulement à la pression d'application ou de mise en contact des freins des roues avant tant que la décélération angulaire des roues arrière (10, 10') reste au-dessous d'une valeur prédéterminée.

3. Procédé selon la revendication 1 ou 2, utilisant des moyens (46) pour constater une accélération transversale du véhicule, caractérisé en ce que les freins des roues arrière sont alimentés avec la pression de freinage supérieure à celle régnant sur les freins des roues avant tant que le véhicule ne subit pas d'accélération transversale.

4. Procédé selon la revendication 3, caractérisé en ce qu'un dispositif (44) est prévu pour relever l'angle de braquage d'un dispositif de direction du véhicule et que les freins des roues arrière sont seulement alimentés avec la pression de freinage supérieure à celle régnant sur les freins des roues avant lorsque l'angle de braquage ne dépasse pas une valeur prédéterminée.

5. Procédé selon la revendication 3 ou 4, caractérisé en ce que les freins des roues avant et des roues arrière sont alimentés en pression de freinage lorsque le véhicule subit une accélération transversale.

6. Procédé selon une des revendications précédentes, dans lequel le véhicule comporte un dispositif pour mesurer sa vitesse, caractérisé en ce que les freins des roues arrière sont seulement alimentés avec une pression de freinage supérieure à la pression régnant sur les freins des roues avant lorsque la vitesse du véhicule est au-dessous d'une valeur prédéterminée.

7. Procédé selon une des revendications précédentes et dans lequel est mesuré le gradient de montée de la pression de freinage au début d'un freinage, caractérisé en ce que, au début d'un freinage, les Freins des roues arrière sont seulement alimentés avec une pression de freinage accrue par rapport à la pression de freinage régnant sur les freins des roues avant lorsque ledit gradient est au-dessous d'une valeur prédéterminée.

8. Procédé selon une des revendications précédentes, dans lequel est mesurée la charge de l'essieu arrière, caractérisé en ce que, au début d'un freinage, les freins des roues arrière sont seulement alimentés avec une pression de freinage supérieure à la pression régnant sur les freins des roues avant lorsque la charge de l'essieu arrière dépasse une valeur prédéterminée.

9. Procédé pour le freinage avec protection contre le blocage des roues d'un véhicule possédant au moins deux essieux avec des capteurs de vitesse de rotation (26, 26', 28, 28') sur au moins les roues arrière (10, 10') du véhicule et un circuit pour exploiter les vitesses de rotation et pour déterminer la décélération angulaire des roues, le véhicule étant équipé d'un circuit de commande hydraulique agissant sur les freins des roues avant (14, 14') et des roues arrière (16, 16') et d'un frein auxiliaire pouvant être actionné indépendamment du circuit de commande hydraulique et agissant sur les roues arrière, caractérisé en ce que, lors d'un actionnement du circuit de commande hydraulique, le frein auxiliaire est également actionné, automatiquement, tant que la décélération angulaire des roues arrière (10, 10') reste au-dessous d'une valeur prédéterminée.

10. Procédé selon la revendication 9, caractérisé en ce que le frein auxiliaire est en même temps un frein susceptible d'être actionné manuellement, indépendamment d'un actionnement du circuit de commande hydraulique.

11. Procédé selon la revendication 9 ou 10, caractérisé en ce que le serrage du frein auxiliaire peut être déclenché manuellement, en particulier à l'aide d'un contact électrique.

12. Procédé selon une des revendications 9 à 11, caractérisé en ce que le frein auxiliaire peut être actionné mécaniquement au moyen d'un servomoteur.

13. Procédé selon une des revendications 9 à 12, caractérisé en ce que le frein auxiliaire constitue un frein à main pouvant être activé par un capteur d'angle d'inclinaison et que cette activation peut être supprimée par un capteur d'embrayage qui détermine si le moteur du véhicule est embrayé.

14. Procédé selon une des revendications 9 à 12, caractérisé en ce que, lors d'un actionnement des freins, le frein auxiliaire est actionné quand un effort d'actionnement mesuré sur la pédale de frein est au-dessous d'une valeur prédéterminée.

15. Dispositif de freinage pour un véhicule possédant au moins deux essieux avec des capteurs de vitesse de rotation (26, 26', 28, 28') sur au moins les roues arrière du véhicule et un circuit pour exploiter les vitesses de rotation et déterminer la décélération angulaire des roues et un circuit de commande hydraulique agissant sur les freins des roues avant (14, 14') et des roues arrière (16, 16'), caractérisé par la prévision sur les roues arrière (10, 10') d'un frein auxiliaire pouvant également être actionné par le circuit de commande hydraulique et qui est actionné tant que la décélération angulaire des roues arrière reste au-dessous d'une valeur prédéterminée.

16. Dispositif de freinage selon la revendication 15 comprenant des freins à disque sur les roues arrière, caractérisé en ce que chacune des roues arrière (10, 10') est munie d'un frein auxiliaire sous la forme d'un second étrier.

17. Dispositif de freinage selon la revendication 15 comprenant des freins à disque sur les roues arrière, caractérisé en ce que le frein auxiliaire est formé chaque fois par un second disque auquel est coordonné un étrier de frein.

18. Dispositif de freinage selon la revendication 15 comprenant des freins à tambour sur les roues arrière, caractérisé en ce qu'un tambour supplémentaire est prévu en tant que frein auxiliaire sur chacune des roues arrière.
